(19) Europäisches Patentamt
European Patent Office
Office européen des brevets

(11) EP 1 136 446 A2

(12) **EUROPÄISCHE PATENTANMELDUNG**

(43) Veröffentlichungstag:
**26.09.2001 Patentblatt 2001/39**

(21) Anmeldenummer: **01103588.8**

(22) Anmeldetag: **21.02.2001**

(51) Int Cl.[7]: **C01G 45/00**, C01G 49/00, C01G 51/00, H01M 4/52, C01G 53/00, H01M 4/48

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.03.2000 DE 10014884**

(71) Anmelder: **MERCK PATENT GmbH**
**64293 Darmstadt (DE)**

(72) Erfinder:
- **Oesten, Rüdiger**
  **64331 Weiterstadt (DE)**
- **Li, Bangyin**
  **Iwaki-shi, 970-8026 (JP)**
- **Nakamura, Nobuaki**
  **Iwaki-shi, 971-8151 (JP)**
- **Nitta, Katsuhisa**
  **Iwaki-shi, 971-8102 (JP)**

# (54) Beschichtete Lithium-Mischoxid-Partikel und ein Verfahren zu deren Herstellung

(57) Die Erfindung betrifft mit einer Mischung aus Alkalimetallverbindungen und Metalloxiden ein- oder mehrfach beschichtete Lithium-Mischoxid-Partikel zur Verbesserung der Eigenschaften elektrochemischer Zellen.

EP 1 136 446 A2

Printed by Jouve, 75001 PARIS (FR)

## Beschreibung

Die Erfindung betrifft mit Alkaimetallverbindungen und Metalloxiden ein- oder mehrfach beschichtete Lithium-Mischoxid-Partikel zur Verbesserung der Eigenschaften elektrochemischer Zellen.

Der Bedarf an wiederaufladbaren Lithium-Batterien ist hoch und wird in Zukunft noch sehr viel stärker ansteigen. Die Gründe hierfür sind die hohe erzielbare Energiedichte und das geringe Gewicht dieser Batterien. Anwendung finden diese Batterien in Mobiltelefonen, tragbaren Videokameras, Laptops etc.

Der Einsatz von metallischem Lithium als Anodenmaterial führt bekanntermaßen wegen der Dentritenbildung beim Auflösen und Abscheiden des Lithiums zu einer ungenügenden Zyklenfestigkeit der Batterie und zu einem erheblichen Sicherheitsrisiko (interner Kurzschluß) (J. Power Sources, 54 (1995) 151).

Die Lösung dieser Probleme geschah durch Ersatz der Lithiummetall-Anode durch andere Verbindungen, die reversibel Lithiumionen interkalieren können. Das Funktionsprinzip der Lithium-Ionen-Batterie beruht darauf, daß sowohl die Kathoden- als auch die Anodenmaterialien Lithiumionen reversibel interkalieren können. D. h. beim Laden wandern die Lithiumionen aus der Kathode, diffundieren durch den Elektrolyten und werden in der Anode interkaliert. Beim Entladen läuft derselbe Prozeß in umgekehrter Richtung ab. Aufgrund dieser Funktionsweise werden diese Batterien auch "Rocking-chair" oder Lithium-Ionen-Batterien genannt.

Die resultierende Spannung einer solchen Zelle wird bestimmt durch die Differenz der Lithium-Interkalationspotentiale der Elektroden. Um eine möglichst hohe Spannung zu erreichen, muß man Kathodenmaterialien, die Lithiumionen bei sehr hohen Potentialen und Anodenmaterialien, die Lithiumionen bei sehr niedrigen Potentialen (vs. $Li/Li^+$) interkalieren, verwenden. Kathodenmaterialien, die diesen Anforderungen genügen, sind $LiCoO_2$ und $LiNiO_2$, welche eine Schichtstruktur aufweisen, und $LiMn_2O_4$, welches eine kubische Raumnetzstruktur besitzt. Diese Verbindungen deinterkalieren Lithiumionen bei Potentialen um 4V (vs $Li/Li^+$). Bei den Anodenverbindungen erfüllen bestimmte Kohlenstoff-Verbindungen wie z. B. Graphit die Anforderung eines niedrigen Potentials und einer hohen Kapazität.

Anfang der neunziger Jahre brachte die Firma Sony eine Lithium-Ionen-Batterie auf den Markt, die aus einer Lithiumcobaltoxid-Kathode, einem nicht-wäßrigen flüssigen Elektrolyten und einer Kohlenstoff-Anode besteht (Progr. Batteries Solar Cells, 9 (1990) 20).

Für 4V-Kathoden werden $LiCoO_2$, $LiNiO_2$ und $LiMn_2O_4$ diskutiert und eingesetzt. Als Elektrolyt werden Mischungen verwendet, die neben einem Leitsalz noch aprotische Lösungsmittel enthalten. Die am häufigsten verwendeten Lösungsmittel sind Ethylenkarbonat (EC), Propylenkarbonat (PC), Dimethylkarbonat (DMC), Diethylkarbonat (DEC) und Ethylmethylkarbonat (EMC). Obwohl eine ganze Reihe von Leitsalzen diskutiert werden, wird fast ausnahmslos $LiPF_6$ verwendet. Als Anode dient in der Regel Graphit.

Ein Nachteil der state-of-art Batterien ist, daß die Hochtemperaturlagerfähigkeit und -zyklisierbarkeit schlecht ist. Die Gründe hierfür sind neben dem Elektrolyten die verwendeten Kathodenmaterialien, insbesondere der Lithium-Mangan-Spinell $LiMn_2O_4$.

Der Lithium Mangan Spinell ist jedoch als Kathode für Gerätebatterien ein vielversprechendes Material. Der Vorteil gegenüber $LiNiO_2$-und $LiCoO_2$-basierten Kathoden ist die verbesserte Sicherheit im geladenen Zustand, die Ungiftigkeit und die geringeren Kosten der Rohmaterialien.

Nachteilig bei dem Lithium Mangan Spinell sind seine geringere Kapazität und seine ungenügende Hochtemperaturlagerfähigkeit und damit verbunden schlechte Zyklenfestigkeit bei hohen Temperaturen. Als Grund hierfür wird die Löslichkeit des zweiwertigen Mangan im Elektrolyten angesehen (Solid State Ionics 69 (1994) 59; J. Power Sources 66 (1997) 129; J. Electrochem. Soc. 144 (1997) 2178). Im Spinell $LiMn_2O_4$ liegt das Mangan in zwei Oxidationsstufen vor, nämlich drei- und vierwertig. Der $LiPF_6$-haltige Elektrolyt enthält immer auch Verunreinigungen von Wasser. Dieses Wasser reagiert mit dem Leitsalz $LiPF_6$ unter Bildung von LiF und sauren Komponenten, z.B. HF. Diese sauren Komponenten reagieren mit dem dreiwertigen Mangan im Spinell unter Bildung von $Mn^{2+}$ und $Mn^{4+}$ (Disproportionierung: $2Mn^{3+} \rightarrow Mn^{2+} + Mn^{4+}$). Diese Degradation findet auch schon bei Raumtemperatur statt, beschleunigt sich aber mit zunehmender Temperatur.

Eine Möglichkeit, die Stabilität des Spinells bei hohen Temperaturen zu erhöhen, besteht darin, ihn zu dotieren. Beispielsweise kann man einen Teil der Manganionen durch andere, beispielsweise dreiwertige, Metallkationen ersetzen. Antonini et al. berichten, daß Spinelle, die mit Gallium und Chrom dotiert sind (beispielsweise $Li_{1.02}Ga_{0.025}Cr_{0.025}Mn_{1.95}O_4$) bei 55°C eine befriedigende Lager- und Zyklenstabilität zeigen (J. Electrochem. Soc, 145 (1998) 2726).

Einen ähnlichen Weg beschreiten die Forscher von Bellcore Inc. Sie ersetzen einen Teil des Mangans durch Aluminium und zusätzlich einen Teil der Sauerstoffionen durch Fluoridionen ($(Li_{1+x}Al_yMn_{2-x-y})O_{4-z}F_z$). Auch diese Dotierung führt zu einer Verbesserung der Zyklenstabilität bei 55°C (WO 9856057).

Ein anderer Lösungsansatz besteht darin, die Oberfläche des Kathodenmaterials zu modifizieren. In US 5695887 werden Spinellkathoden vorgeschlagen, die eine reduzierte Oberfläche aufweisen und deren katalytische Zentren durch Behandlung mit Chelatbildnern, z.B. Acetylaceton, abgesättigt werden. Solche Kathodenmaterialien zeigen deutlich reduzierte Selbstentladung und verbesserte Lagerfähigkeit bei 55°C. Die Zyklenfestigkeit bei 55°C

wird nur leicht verbessert (Solid State Ionics 104 (1997) 13).

Eine weitere Möglichkeit besteht darin, die Kathodenpartikel mit einer Schicht zu überziehen, beispielsweise einem Lithiumborat-Glas (Solid State Ionics 104 (1997) 13). Hierfür wird ein Spinell in eine methanolische Lösung von $H_3BO_3$, $LiBO_2{}^*8H_2O$ und $LiOH^*H_2O$ gegeben und bei 50-80°C gerührt, bis das Lösungsmittel vollständig verdampft ist. Anschließend wird das Pulver auf 600-800°C erhitzt, um die Umsetzung in das Borat zu gewährleisten. Die Lagerfähigkeit bei hohen Temperaturen wird dadurch verbessert. Eine verbesserte Zyklenfestigkeit wurde jedoch nicht gefunden.

In WO 98/02930 werden undotierte Spinelle mit Alkalimetallhydroxid-Lösungen behandelt. Anschließend wird der behandelte Spinell in einer $CO_2$ Atmosphäre erhitzt, um aus den anhaftenden Hydroxiden die entsprechenden Karbonate zu machen. Die so modifizierten Spinelle zeigen verbesserte Hochtemperatur-lagerfähigkeit als auch verbesserte Zyklenfestigkeit bei hohen Temperaturen.

Die Beschichtung von Elektroden zur Verbesserung von verschiedenen Eigenschaften von Lithium Ionen Batterien ist schon öfters beschrieben worden.

Beispielsweise wird die Kathode und/oder Anode in der Weise beschichtet, daß auf den Stromableiter das Aktivmaterial zusammen mit Binder und einem leitfähigen Material aufpastiert wird. Anschließend wird eine Paste, bestehend aus dem Beschichtungsmaterial, Binder und/oder Lösungsmittel auf die Elektrode aufgebracht. Als Beschichtungsmaterialien werden anorganische und oder organische Materialien, die leitfähig sein können, benannt, z. B. $Al_2O_3$, Nickel, Graphite, LiF, PVDF etc. Lithium-Ionen-Batterien, die solcherart beschichtete Elektroden enthalten, zeigen hohe Spannungen und Kapazitäten sowie eine verbesserte Sicherheitscharakteristik (EP 836238).

Ganz ähnlich wird auch in US 5869208 vorgegangen. Auch hier wird erst die Elektrodenpaste (Kathodenmaterial: Lithium Mangan Spinell) hergestellt und auf den Stromableiter aufgebracht. Dann wird die Schutzschicht, bestehend aus einem Metalloxid und Binder, auf die Elektrode aufpastiert. Verwendete Metalloxide sind beispielsweise Aluminiumoxid, Titanoxid und Zirkonoxid.

In JP 08236114 wird ebenfalls erst die Elektrode hergestellt, vorzugsweise $LiNi_{0.5}Co_{0.5}O_2$ als Aktivmaterial, und dann eine Oxidschicht durch Sputtern, Vakuum Verdampfung oder CVD aufgebracht.

In JP 09147916 wird eine Schutzschicht, bestehend aus festen Oxidpartikeln, beispielsweise MgO, CaO, SrO, $ZrO_2$, $Al_2O_3$ $SiO_2$, und einem Polymer, auf die Seite des Stromableiters aufgebracht, die die Elektrode enthält. Dadurch werden hohe Spannungen und eine hohe Zyklenfestigkeit erreicht.

Ein anderer Weg wird in JP 09165984 beschritten. Als Kathodenmaterial dient der Lithium Mangan Spinell, der mit Boroxid beschichtet wird. Diese Beschichtung wird während der Spinell-Synthese erzeugt. Hierzu werden eine Lithium-, Mangan- und Borverbindung in einer oxidierenden Atmosphäre calciniert. Die so erhaltenen Boroxid-beschichteten Spinelle zeigen keine Manganauflösung bei hohen Spannungen.

Es wird aber nicht nur mit oxidischen Materialien beschichtet, sondern auch mit Polymeren wie in JP 07296847 zur Verbesserung der Sicherheitscharakteristik beschrieben. In JP 08250120 erfolgt die Beschichtung mit Sulfiden, Seleniden und Telluriden zur Verbesserung der Zyklen-Performance und in JP 08264183 mit Fluoriden zur Verbesserung der Zyklenlebensdauer.

Aufgabe der vorliegenden Erfindung ist es, Elektrodenmaterialien zur Verfügung zu stellen, die eine verbesserte Stabilität gegenüber Säuren aufweisen, ohne die Nachteile des Standes der Technik.

Die erfindungsgemäße Aufgabe wird gelöst durch Lithium-Mischoxid-Partikel, welche mit Alkalimetallverbindungen und Metalloxiden beschichtet sind.

Gegenstand der Erfindung ist auch ein Verfahren zur Beschichtung der Lithium-Mischoxid-Partikel und die Anwendung in elektrochemischen Zellen, Batterien, sekundären Lithiumbatterien und Superkondensatoren.

Das Beschichtungs-Verfahren ist gekennzeichnet durch folgende Verfahrensschritte:

a)die Lithium-Mischoxid-Partikel werden in einem organischen Lösungsmittel suspendiert,

b)eine Alkalimetallsalzverbindung wird suspendiert in einem organischen Lösungsmittel zugegeben,

c)Metallalkoxide werden gelöst in einem organischen Lösungsmittel zugegeben,

d)die Suspension wird mit einer Hydrolyselösung versetzt und

e)die beschichteten Partikel werden abfiltriert, getrocknet und calciniert.

Die vorliegende Erfindung betrifft undotierte und dotierte Mischoxide als Kathodenmaterialien aus der Gruppe $LiMn_2O_4$, $Li_xM_yMn_{2-y}O_4$, mit M ausgewählt aus der Gruppe Ti, Ge, Fe, Co, Cr, Cu, Li, Al, Mg, Ga, Zn, Ni und V, $LiNiO_2$, $LiCoO_2$, $LiM_yCo_{1-y}O_2$, mit M ausgewählt aus der Gruppe Fe, B, Si, Cu, Ce, Y, Ti, V, Sn, Zr, La, Ni, Al, Mg, Cr, und Mn, $LiM_yNi_{1-y}O_2$, mit M ausgewählt aus der Gruppe Fe, Al, Ti, V, Co, Cu, Zn, B, Mg, Cr und Mn, $Li_xWO_3$, $Li_xTiS_2$. Ebenso

betrifft die vorliegende Erfindung andere Lithium-Interkalations und Insertions-Verbindungen die für 4V-Kathoden geeignet sind, deren Herstellung und Verwendung, insbesondere als Kathodenmaterial in elektrochemischen Zellen.

In der vorliegenden Erfindung werden die Lithium-Mischoxid-Partikel, um eine verbesserte Stabilität gegenüber Säuren zu erhalten, mit Mischungen aus Alkalimetallverbindungenen und Metalloxiden beschichtet.

Als Beschichtungsmaterialien sind Mischungen mit verschiedenen Metalloxiden, insbesondere Oxiden bzw. Mischoxiden aus der Gruppe Zr, Al, Si, Ti, La, Y, Sn, Zn, Mg, Ca und Sr und deren Mischungen geeignet. Die Mischungen bestehen aus verschiedenen Metalloxiden, insbesondere Oxide oder Mischoxide hergestellt aus ihren Metallalkoxiden.

Für die Mischungen zur Beschichtung sind Alkalimetalle geeignet. Die Alkalimetalle Li, Na, K, Rb und Cs werden dabei aus ihren Salzen, insbesondere den organischen Salzen zur Verfügung gestellt.

Es wurde gefunden, daß das optimale Gewichts-Verhältnis des Metalloxides zu Lithium-Mischoxid-Partikeln bei 0,01 bis 20 % liegt, besonders bevorzugt zwischen 0,1 und 10%. Das optimale Gewichts-Verhältnis des Alkalimetalls zu Lithium-Mischoxid-Partikeln liegt zwischen 0,01 und 10%, besonders bevorzugt zwischen 0,1 und 5%.

Es wurde gefunden, daß durch die Beschichtung mit den besagten Mischungen aus Alkalimetallverbindungen und Metalloxiden die unerwünschten Reaktionen der Säuren mit den Elektrodenmaterialien stark gehemmt werden können.

Überraschend wurde gefunden, daß durch die Beschichtung eines herkömmlichen Lithium Mangan Spinells das Herauslösen von Mn durch Säuren wie HF und Essigsäure verhindert werden kann.

Desweiteren wurde gefunden, daß die Beschichtung der einzelnen Partikel gegenüber der Beschichtung der Elektrodenbänder einige Vorteile hat. Bei Beschädigung des Elektrodenmaterials kann bei den beschichteten Bändern der Elektrolyt einen großen Teil des aktiven Materials angreifen, während bei der Beschichtung der einzelnen Partikel diese unerwünschten Reaktionen stark lokalisiert bleiben.

Die Lithium-Mischoxid-Partikel können ein- oder mehrfach beschichtet werden.

Die beschichteten Lithium-Mischoxid-Partikel können mit den üblichen Träger- und Hilfsstoffen zu Kathoden, insbesondere zu 4V-Kathoden, z.B. für Lithium-Ionen-Batterien, verarbeitet werden.

Zudem wird die Beschichtung bei dem Zulieferer durchgeführt, so daß der Batteriehersteller, die für das Beschichten notwendigen, Verfahrensänderungen nicht vornehmen muß.

Aufgrund der Beschichtung der Materialien ist auch die Verbesserung der Sicherheitsaspekte zu erwarten.

Das erfindungsgemäße Kathodenmaterial kann in sekundären Lithium-Ionen-Batterien mit gängigen Elektrolyten eingesetzt werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ \; B^-(OR^1)_m(OR^2)_p$$

worin,

m und p 0, 1, 2, 3 oder 4 mit m+p=4 und
$R^1$ und $R^2$ gleich oder verschieden sind,

gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,
haben und

Hal F, Cl oder Br

und

A Alkyl mit 1 bis 6 C-Atomen, das ein- bis dreifach halogeniert sein kann, bedeuten. Ebenso geeignet sind Alkalial-

koholate der allgemeinen Formel

$$Li^+ OR^-$$

sind, worin R
die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, hat und

Hal F, Cl, oder Br,

und

A Alkyl mit 1 bis 6 C-Atomen, das ein- bis dreifach halogeniert sein kann.

Auch Lithiumkomplexsalze der Formel

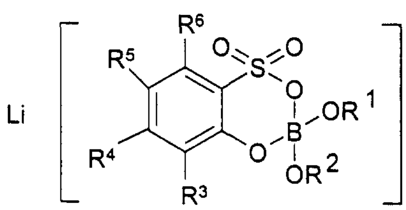

wobei
$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,
$R^3$-$R^6$ können jeweils einzeln oder paarweise, gegebenenfalls durch eine Einfach oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
**[0042]** Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,
die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

$$[([R^1(CR^2R^3)_k]_lA_x)_yKt]^{+}\ {}^{-}N(CF_3)_2$$

wobei

Kt= N, P, As, Sb, S, Se

A= N, P, P(O), O, S, S(O), $SO_2$, As, As(O), Sb, Sb(O) $R^1$, $R^2$ und $R^3$

gleich oder verschieden
H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
**[0045]** A kann in verschiedenen Stellungen in $R^1$, $R^2$ und/oder $R^3$ eingeschlossen sein,
**[0046]** Kt kann in cyclischen oder heterocyclischen Ring eingeschlossen sein,
die an Kt gebundenen Gruppen können gleich oder verschieden sein
mit

n= 1-18
m= 3-7
k= 0, 1-6
1= 1 oder 2 im Fall von x=1 und 1 im Fall x=0
x= 0,1
y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2 \qquad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E \qquad (III)$$

wobei
Kt, A, $R^1$, $R^2$, $R^3$, k, l, x und y die oben angegebene Bedeutung haben und
$^-E$ $F^-$, $Cl^-$, $Br^-$, $I^-$, $BF_4^-$, $ClO_4^-$, $AsF_6^-$, $SbF_6^-$ oder $PF_6^-$
bedeutet, umgesetzt wird.
Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

| | |
|---|---|
| x | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, $m \neq 0$ |
| n | 1-9 |
| k | 0, falls m=0 und k=1, falls m=1-9, |

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

| | |
|---|---|
| x, y | 1, 2, 3, 4, 5, 6 |
| $M^{x+}$ | ein Metallion |
| E | einer Lewis-Säure, ausgewählt aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$, |

$R^1$ bis $R^5$ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

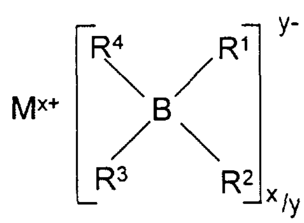

worin bedeuten:

| | |
|---|---|
| M | ein Metallion oder Tetraalkylammoniumion |
| x,y | 1, 2, 3, 4, 5 oder 6 |

$R^1$ bis $R^4$ gleich oder verschieden, gegebenenfalls durch eine Einfach- oder Doppelbindung direkt miteinander verbunder Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Nachfolgend wird ein allgemeines Beispiel der Erfindung erläutert.

4 V-Kathodenmaterialien, insbesondere Materialien aus der Gruppe $LiMn_2O_4$, $Li_xM_yMn_{2-y}O_4$, mit M ausgewählt aus der Gruppe Ti, Ge, Fe, Co, Cr, Cu, Li, Al, Mg, Ga, Zn, Ni und V, $LiNiO_2$, $LiCoO_2$, $LiM_yCo_{1-y}O_2$, mit M ausgewählt aus der Gruppe Fe, B, Si, Cu, Ce, Y, Ti, V, Sn, Zr, La, Ni, Al, Mg, Cr, und Mn, $LiM_yNi_{1-y}O_2$, mit M ausgewählt aus der Gruppe Fe, Al, Ti, V, Co, Cu, Zn, B, Mg, Cr und Mn, $Li_xWO_3$, $Li_xTiS_2$, werden in polaren organischen Lösungsmitteln, wie z.B. Alkohole, Aldehyde, Halogenide oder Ketone suspendiert. Alkalimetallsalze, bevorzugt aus der Gruppe Lithium-, Natrium-, Kalium-, Rubidium- und Cäsiumacetate, -acetylacetonate, -lactate, -oxalate, -salicylate und-stearate werden in polaren organischen Lösungsmitteln, wie z.B. Alkohole, Aldehyde, Halogenide oder Ketone suspendiert zugegeben. Die Materialien können auch in unpolaren organischen Lösungsmitteln, wie z.B. Cycloalkanen oder Aromaten, suspendiert werden. Das Reaktionsgefäß ist beheizbar und mit einem Rührer und/oder einer Ablenkplatte ausgestattet. Die Reaktion wird unter Inertgas-Atmosphäre durchgeführt. Die Reaktionslösung wird auf Temperaturen zwischen 10 und 100°C, in Abhängigkeit vom Siedepunkt des Lösungsmittels, erwärmt.

Eine Lösung aus Metallalkoxiden, ausgewählt aus der Gruppe $Zr(OR)_4$, $Al(OR)_3$, $Si(OR)_4$, $Ti(OR)_4$, $La(OR)_3$, $Y(OR)_3$, $Sn(OR)_4$, $Zn(OR)_2$, $Mg(OR)_2$, $Ca(OR)_2$ und $Sr(OR)_2$ und deren Mischungen, mit R gleich oder verschieden und $C_1$ bis $C_4$-Alkyl-Gruppen und/oder teilweise einem Chelatbildner wie z.B. Acetylaceton, Ethylacetylaceton usw., wird in einem polaren organischen Lösungsmitteln, wie z.B. Alkohole, Aldehyde, Halogenide oder Ketone suspendiert zugegeben.

Als Hydrolyselösung sind, entsprechend des verwendeten Lösungsmittels der Beschichtungslösung, Säuren, Basen, bzw. deren wäßrige Lösungen oder Wasser geeignet. Die Hydrolyselösung wird langsam zudosiert. Die Dosiermengen und Geschwindigkeiten sind abhängig von den eingesetzten Metallsalzen. Um zu gewährleisten, daß die Hydrolysereaktion quantitativ abläuft, wird die Hydrolyselösung im Überschuß zugegeben.

Die Hydrolyse kann auch gleichzeitig mit der Zugabe des Metallalkoxides erfolgen, in Abhängigkeit von der Art des Metallalkoxides.

Nach dem Ende der Reaktion wird die Lösung abfiltriert und das erhaltene Pulver getrocknet. Um eine vollständige Umsetzung in das Metalloxid sicherzustellen, muß das getrocknete Pulver noch calciniert werden. Das erhaltene Pulver wird auf 300°C bis 900°C, vorzugsweise auf 500 bis 780°C, erhitzt und 10 min bis 24 Stunden bei dieser Temperatur gehalten.

Die nachfolgenden Beispiele sollen die Erfindung näher erläutern, ohne sie jedoch zu beschränken.

## Beispiele

### Beispiel 1

Beschichtung von Kathodenmaterialien

600g Lithium-Mangan-Spinell, SP35 Selectipur® der Firma Merck, werden in 2200g wasserfreiem Ethanol dispergiert, auf 45°C erhitzt und unter $N_2$-Atmosphäre gerührt. 61,22g Lithiumacetat, gelöst in 300g wasserfreiem Ethanol, werden zugegeben. Nach 10 min wird eine Lösung von 20,10g $Zr(O\text{-}nC_3H_7)_4$ in 402g wasserfreiem Ethanol zugegeben. Nach 30 min werden 60g entsalztes Wasser in 240g wasserfreiem Ethanol langsam (2 ml/min) zugegeben. 12 Stunden nach dem Start der Hydrolyse wird das Produkt abfiltriert und 2 Stunden bei 110°C getrocknet. Das getrocknete Produkt wird ½ Stunde bei 500°C calciniert. Das Produkt ist ein mit lithiumhaltigem Zirkoniumoxid beschichtetes $LiMn_2O_4$.

### Beispiel 2

Vergleichsbeispiel

600g $LiMn_2O_4$, SP35 Selectipur® von Merck, werden in 2200g wasserfreiem Ethanol dispergiert, auf 45°C erhitzt und unter $N_2$-Atmosphäre gerührt. Eine Lösung von 20,10g $Zr(O\text{-}nC_3H_7)_4$ gelöst in 402g wasserfreiem Ethanol wird zugegeben. Nach 30 min werden 60g entsalztes Wasser in 240g wasserfreiem Ethanol langsam (2 ml/min) zugegeben. 12 Stunden nach dem Start der Hydrolysereaktion wird das Produkt abfiltriert und 2 Stunden bei 110°C getrocknet. Das getrocknete Produkt wird ½ Stunde bei 500°C calciniert. Das Produkt ist ein mit 1,0 Gewichts-% Zirkoniumoxid beschichtetes $LiMn_2O_4$.

Beispiel 3

Beschichtung von Kathodenmaterialien

600g $LiMn_2O_4$, SP35 Selectipur® von Merck, werden in 2200g wasserfreiem Isopropylalkohol dispergiert, auf 45°C erhitzt und unter $N_2$-Atmosphäre gerührt. 30,61g Lithiumacetat, gelöst in 300g wasserfreiem Ethanol, werden zugegeben. Nach 10 min wird eine Lösung aus 32,41g $Al(O\text{-}isoC_3H_7)_2[OC(CH_3)=CHCOOC_2H_5]$ in 324g wasserfreiem Isopropylalkohol langsam (2,3 ml/min) zugegeben. Gleichzeitig werden 63,61g entsalztes Wasser gelöst in 144g wasserfreiem Isopropylalkohol langsam (1,4 ml/min) zugegeben. 12 Stunden nach dem Start der Hydrolysereaktion wird das Produkt abfiltriert und 2 Stunden bei 110°C getrocknet. Das getrocknete Produkt wird ½ Stunde bei 700°C calciniert. Das Produkt ist ein mit lithiumhaltigem Aluminiumoxid beschichtetes $LiMn_2O_4$.

Beispiel 4

Vergleichsbeispiel

600g $LiMn_2O_4$, SP35 Selectipur® von Merck, werden in 2200g wasserfreiem Isopropylalkohol dispergiert, auf 45°C erhitzt und unter $N_2$-Atmosphäre gerührt. Es wird eine Lösung aus 32,41g $Al(O\text{-}isoC_3H_7)_2[OC(CH_3)=CHCOOC_2H_5]$ in 324g wasserfreiem Isopropylalkohol langsam (2,3 ml/min) zugegeben. Gleichzeitig werden 63,61g entsalztes Wasser gelöst in 144g wasserfreiem Isopropylalkohol langsam (1,4 ml/min) zugegeben. 12 Stunden nach dem Start der Hydrolysereaktion wird das Produkt abfiltriert und 2 Stunden bei 110°C getrocknet. Das getrocknete Produkt wird ½ Stunde bei 700°C calciniert. Das Produkt ist ein mit 1,0 Gewichts-% Aluminiumoxid beschichtetes $LiMn_2O_4$.

Untersuchung der chemischen Stabilität

Es werden 0,5g eines nach den oben angegebenen Beispielen beschichtetes $LiMn_2O_4$ in 100g einer wäßrigen Säurelösung (1000 ppm Essigsäure bzw. 1000 ppm HF) gegeben. Über 1 Stunde wird die Farbe der Lösung beobachtet und die Säurestabilität bewertet. Zum Vergleich wird auch unbeschichtetes $LiMn_2O_4$, SP35 Selectipur® von Merck, untersucht.

In Tabelle 1 sind die Ergebnisse der unbeschichteten und beschichteten Lithium-Mangan-Spinelle gegenübergestellt.

Tabelle 1:

| Säurestabilität (0-farblos bis 5-hell rosa) | | |
|---|---|---|
| | in 1000 ppm $CH_3COOH$ | in 1000 ppm HF |
| unbeschichtetes $LiMn_2O_4$ (SP35) | 5 | 5 |
| Beispiel 1 | ~0 | ~0 |
| Beispiel 2 | 1-2 | 1-2 |
| Beispiel 3 | 0 | 0 |
| Beispiel 4 | ~1 | ~1 |

Farblos bedeutet, daß kein Mangan in Lösung gegangen ist. Diese Proben weisen eine hohe Säurestabilität auf. Die unbeschichtete Probe zeigt sofort eine Färbung der Lösung und damit eine schlechte Beständigkeit gegen Säuren. Das erfindungsgemäß beschichtete $LiMn_2O_4$ zeigt eine bessere Säurestabilität als das einfach mit Metalloxiden beschichtete $LiMn_2O_4$.

## Patentansprüche

1. Lithium-Mischoxid-Partikel, **dadurch gekennzeichnet, daß** diese mit Alkalimetallverbindungen und Metalloxiden ein- oder mehrfach beschichtet sind.

2. Lithium-Mischoxid-Partikel nach Anspruch 1, **dadurch gekennzeichnet, daß** die Partikel aus der Gruppe $LiMn_2O_4$, $Li_xM_yMn_{2-y}O_4$, mit M ausgewählt aus der Gruppe Ti, Ge, Fe, Co, Cr, Cu, Li, Al, Mg, Ga, Zn, Ni und V, $LiNiO_2$, $LiCoO_2$, $LiM_yCo_{1-y}O_2$, mit M ausgewählt aus der Gruppe Fe, B, Si, Cu, Ce, Y, Ti, V, Sn, Zr, La, Ni, Al, Mg, Cr, und

Mn, $LiM_yNi_{1-y}O_2$, mit M ausgewählt aus der Gruppe Fe, Al, Ti, V, Co, Cu, Zn, B, Mg, Cr und Mn, $Li_xWO_3$, $Li_xTiS_2$ und andere Lithium-Interkalations und Insertions-Verbindungen ausgewählt sind.

**3.** Lithium-Mischoxid-Partikel nach Anspruch 1 oder 2, **dadurch gekennzeichnet, daß** die Metalloxide aus der Gruppe Zr, Al, Si, Ti, La, Y, Sn, Zn, Mg, Ca und Sr und deren Mischungen, hergestellt aus ihren Metallalkoxiden, ausgewählt sind.

**4.** Lithium-Mischoxid-Partikel nach einem der Ansprüche 1 bis 3, **dadurch gekennzeichnet, daß** das Gewichts-Verhältnis des Metalloxides zu Lithium-Mischoxid-Partikeln 0,01 bis 20% beträgt.

**5.** Lithium-Mischoxid-Partikel nach Anspruch 4, **dadurch gekennzeichnet, daß** das Gewichts-Verhältnis des Metalloxides zu Lithium-Mischoxid-Partikeln 0,1 bis 10% beträgt.

**6.** Lithium-Mischoxid-Partikel nach einem der Ansprüche 1 bis 5, **dadurch gekennzeichnet, daß** die Alkalimetalle aus der Gruppe der Alkalimetallsalze Lithium, Natrium, Kalium, Rubidium und Cäsium, verfügbar gemacht aus ihren Salzen, insbesondere aus organischen Salzen, ausgewählt sind.

**7.** Lithium-Mischoxid-Partikel nach einem der Ansprüche 1 bis 6, **dadurch gekennzeichnet, daß** das Gewichts-Verhältnis des Alkalimetalls zu Lithium-Mischoxid-Partikeln 0,01 bis 10% beträgt.

**8.** Lithium-Mischoxid-Partikel nach Anspruch 7, **dadurch gekennzeichnet, daß** das Gewichts-Verhältnis des Alkalimetalls zu Lithium-Mischoxid-Partikeln 0,1 bis 5% beträgt.

**9.** Kathoden, im wesentlichen beschichtete Lithium-Mischoxid-Partikel nach einem der Ansprüche 1 bis 8 und übliche Träger- und Hilfsstoffe enthaltend.

**10.** Verfahren zur Herstellung von ein- oder mehrfach beschichteten Lithium-Mischoxid-Partikeln, **dadurch gekennzeichnet, daß**

a) die Partikel in einem organischen Lösungsmittel suspendiert werden,

b) eine Alkalimetallsalzverbindung suspendiert in einem organischen Lösungsmittel zugegeben wird,

c) Metallalkoxide gelöst in einem organischen Lösungsmittel zugegeben werden,

d) die Suspension mit einer Hydrolyselösung versetzt wird und

e) die beschichteten Partikel abfiltriert, getrocknet und calciniert werden.

**11.** Verfahren zur Herstellung von ein- oder mehrfach beschichteten Lithium-Mischoxid-Partikeln gemäß Anspruch 10, **dadurch gekennzeichnet, daß** die Schritte c) und d) gleichzeitig durchgeführt werden.

**12.** Verfahren nach Anspruch 10 oder 11, **dadurch gekennzeichnet, daß** Alkalimetallsalze aus der Gruppe Lithium-, Natrium-, Kalium-, Rubidium- und Cäsiumacetate, -acetylacetonate, -lactate,-oxalate, -salicylate und -stearate eingesetzt werden.

**13.** Verfahren zur Herstellung von ein- oder mehrfach beschichteten Lithium-Mischoxid-Partikeln gemäß Anspruch 10, **dadurch gekennzeichnet, daß** als Hydrolyselösung Säuren, Basen, deren wäßrige Zubereitung oder Wasser verwendet wird.

**14.** Mit Alkalimetallverbindungen und Metalloxiden beschichtete Lithium-Mischoxid-Partikel erhältlich nach einem Verfahren gemäß der Ansprüche 10 bis 13.

**15.** Verwendung von beschichteten Lithium-Mischoxid-Partikeln nach einem der Ansprüche 1 bis 8 zur Herstellung von Kathoden für elektrochemische Zellen mit verbesserter Stabilität gegenüber Säuren.

**16.** Verwendung von beschichteten Lithium-Mischoxid-Partikeln nach einem der Ansprüche 1 bis 9 zur Herstellung von 4V-Kathoden.

**17.** Elektrochemische Zellen, z.B. Lithium Ionen Batterien und Superkondensatoren, enthaltend eine Kathode gemäß Anspruch 9.